(19) **Europäisches Patentamt**
**European Patent Office**
**Office européen des brevets**

(11) **EP 3 115 595 A1**

(12) **EUROPEAN PATENT APPLICATION**

(43) Date of publication:
**11.01.2017 Bulletin 2017/02**

(51) Int Cl.:
***F03B 17/06*** *(2006.01)*

(21) Application number: **16170643.7**

(22) Date of filing: **12.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.04.2009 ES 200900750**

(62) Document number(s) of the earlier application(s) in accordance with Art. 76 EPC:
**10766670.3 / 2 463 509**

(71) Applicant: **Astuy Díaz De Mendibil, José Ignacio 48009 Bilbao - Bizkaia (ES)**

(72) Inventor: **Astuy Díaz De Mendibil, José Ignacio 48009 Bilbao - Bizkaia (ES)**

(74) Representative: **Carpintero Lopez, Francisco Herrero & Asociados, S.L.**
**Alcalá 35**
**28014 Madrid (ES)**

Remarks:
This application was filed on 20-05-2016 as a divisional application to the application mentioned under INID code 62.

(54) **ELECTRICITY GENERATOR THAT UTILIZES HYDRAULIC JUMPS**

(57) The generator utilizes the constant force of gravity which causes water to fall through an entry and exit circuit. The system includes multiple pipes, of various heights, and multiple wheels and generators and multiple systems of the invention.

**Description**

APPENDIX OF TECHNICAL FEATURES

(1) I have seen in your Google ads the generation of renewable energy as private individuals, which is an example to be followed by every District Council in the State.

The Government should encourage, and at least give example of power saving, installing these on municipal lands as an initiative. A visible and palpable example of saving for the citizens, installing at least a windmill and a minimal surface of photovoltaic panels that are connected to the grid. A single grain of sand does not make a mountain, but thousands of district councils together DO SAVE CLEAN POWER FOR ALL AND FOR A BETTER FUTURE. IT IS ALL ABOUT STARTING TO JOIN EFFORTS FOR A BETTER WORLD THAT IS MORE PEACEFUL AND CLEANER.

And of even greater value are the savings in clean, ecological and renewable energy, a series of barges or fixed platforms with a clear multiplier effect, in the middle of the river or estuary, at both sides of the flow of the river, with incorporated power generating wheels connected to the grid every 100 metres or every kilometre, with a multiplier effect with one another, in their power saving, as the barges of the Mississippi in their movement, but fixed to the flow of a river or estuary, like a tied-up barge.

On the rivers Ebro, Tagus, Guadiana or Guadalquivir in Spain, or in the Bilbao estuary.

They would make effective use of the tides in both directions, for power savings and energy efficiency, with clean, ecological and renewable energy.

It could even make use of the underground water pipes of the local water network of each municipality, with power generation happening in the same pipes used to provide water; With successive 90° falls with a multiplier effect, like artificial controllable waterfalls in the pipes of the water network of each municipality, using 5 or 10 metres of artificial falls.

For the generation of artificial waterfalls that use the force of gravity to thus generate electrical power, connected to the power grid in a clean, ecological and renewable manner, with the multiplier effect required in each artificially generated waterfall, in each municipality, using the terrestrial force of gravity.

For electrical self-supply, for public lighting for each municipality. The water pipes of a multi-storey building could be used as power generators for clean, ecological and renewable energy if the water from the municipal pipes were stored in a tank or cistern, this same water were taken to the top of the building and stored in and other tank or cistern, by the effect of water pressure and made to fall in 90° pipes in several sections or artificial waterfalls, through several pipes with the diameter or cross-section of the turbines or mills generating clean, ecological and renewable electrical energy.

Similar to a chimney, but here using water with the effect of gravity in the successive and multiple pipes that are found along the entire path of the pipe, as artificial waterfalls, thus moving the water, each and every one of the multiple generators in each pipe, with a multiplier effect for each pipe or artificially controllable waterfall, from a tank or cistern to the following tank or cistern, such as agricultural terraces on the slopes of mountains, in their fall due to the effect of gravity, these water tanks being hermetically sealed and independent from one another, generating at several heights or sections, several and successive tanks or cisterns and artificial waterfalls that generate clean, ecological and renewable electrical energy.

With a multiplier effect, times the number of multi-storey buildings or the number of times it is multiplied in a single or same building with different and independent storeys, plants or sections, or several buildings in a same block, only with this effect of the fall at 90°, in several sections of different and independent storeys in a building, with a multiplier effect, as many times as generated, with the free and controlled 90° fall by gravity of successive artificial waterfalls, with their multiplier effect of generating clean, ecological and renewable electrical energy both for the consumption of the dwellings in the buildings themselves as for contiguous dwellings, the municipal power grid or even the power grids of other municipalities.

$$E=mc^2 \quad E=mg$$

Moreover;

Just as a swimming pool is filled with seawater, a tank or cistern that is at a certain height and is next to the sea can also be filled with seawater, or with the water from a river or estuary for a tank or cistern on the bank, above a multi-storey building and such that the circuit of entry of seawater is continuous, which water is then allowed to fall from the highest deposit or cistern through narrower pipes with a 90° inclination and the cross-section or diameter of the multiple turbines throughout the pipes, generating a controlled artificial waterfall, until the following lower tank or cistern, about 5 to 10 metres below, as the agricultural terraces on mountain slopes, that generate clean, ecological and renewable electrical energy with the spacial multiplier effect of all the pipes that we add with a 90° inclination using gravity, each moving a turbine of each pipe with a cross-section that is narrower than that of the tank or cistern that is immediately above them, due to the multiplier effect of each tank or cistern or the number thereof, of each multi-storey building, and the number thereof, generating clean, ecological and renewable energy.

### (2) Waterproof Submarine Cube

Similarly to the artificial waterfalls, we excavate under the seabed a waterproof submarine cube. Or a prefabricated one can be deposited and anchored to the seabed, or the bed of the existing river, estuary, lake, reservoir or barrage, covered entirely by water $H_2O$.

This is filled with seawater or water from the river or estuary, which due to gravity g = 9.8 m/s2 falls to the bottom of its height n h ($h_1$.....$h_n$) through the n pipes ($t_1$ .......... $t_n$), with the desired extension or surface of the cube ns ($s_1$ .......... $s_n$) by nh or height, with n wheels or n generators n ($Gen_1$ .......... $Gen_n$) for each n pipes ($t_1$ ....................$t_n$) see drawing or Appendix $B_3$.

With the H2O output being through the output pipes ($Tr_1$ $Tr_n$)

As a Continuous H2O Inflow Outflow Circuit to the top deposit or cistern.

Which in this case would be H2O from the existing sea, the river, the estuary, lake or reservoir, entirely covered by $H_2O$.

Until its outflow. The Cube may also additionally incorporate a continuous or constant power generator that would work all 8760 hours in the year, a water treatment plant and a desalination plant,

in order to provide such purified or desalinated water for human consumption or irrigation.

### Formulas

$$E=mc2 \quad E=mg$$

In Drawing A)

G is a constant 9.8 m/s2, as the constant energetic force of the material;

| APPLICATION | FORMULA |
|---|---|
| UNIFORM MOVEMENT | $E = V \cdot T$ |
| ACCELERATED UNI. MOV. | $E = Vi \cdot T + 1/2AT^2$ |
| MOVEMENT IN FREE FALL | $Vf^2 = Vi^2 + 2AE$ |
| UNIFORM CIRCULAR MOVEMENT | $W = \emptyset/T =>$ ANGULAR VELOCITY<br><br>$V = W$-RADIO $=>$ LINEAR VELOCITY<br><br>$W = \emptyset/T = 2\Pi/T = 2\Pi F$ |
| HOOKE'S LAW (SPRINGS) | $\Delta L = F/K$ |
| GRAVITY | $F = G \cdot M \cdot M/D^2$ |
| MOMENTUM | $P = M \cdot V$ |
| PRESSURE | $Pr = F/SURFACE (N/M^2)$ |
| HYDROSTATIC PRESSURE | $Pr H = H \cdot D \cdot G$ |
| THRUST | $E = V_{body} \cdot D_{liquid} \cdot G$ |
| WORK | $W = F \cdot E \cdot Cos\ \alpha$ |
| POWER | $P = W/T$ (JOULE/SECOND) |
| MECHANICAL POTENTIAL ENERGY | $Ep = M \cdot G \cdot H$ |
| KINETIC ENERGY | $1/2M \cdot V^2$ |
| HEAT | $Q = M \cdot K \cdot \Delta T$ |

(continued)

| APPLICATION | FORMULA |
|---|---|
| THERMAL EQUILIBRIUM | $M_1 \cdot K_1(t_1-t) = M_2 \cdot K_2(t-t_2)$ |
| LINEAR DILATION | $L_t = L_0 \cdot (1+\lambda t)$ |
| SUPERFICIAL AND CUBIC DIL. | SAME FORMULA; $\sigma =>S$ $\gamma =>V$ |
| IDEAL GAS EQUATION | $P_1 \cdot V_1/T_1 = P_2 \cdot V_2/T_2$ |
| ELECTRICAL ATTRACTION | $F = K \cdot q_1 \cdot q_2/D^2$ (K=Const.) |
| ELECTRIC POTENTIAL | $V = \Delta Ep/q_0 = K \cdot q/D$ <br> (JOULE/COULOMB) |
| INTENSITY | q/t (COULOMB/SECOND) |
| OHM'S LAW | R = (Va-Vb)/I (VOLTS/AMPERES) |
| RESISTANCES | $R = \rho \cdot$LENGTH/SECTION |
| RESISTANCES IN SERIES | $Rt = \Sigma Ri$; OHM'S LAW=(Va-Vb)=R·I |
| RESISTANCES IN PARALLEL | $1/Rt = 1/R_1 + 1/R_2$ |
| WORK | $W = I^2 \cdot R \cdot T$ ($A^2 \cdot Q \cdot S$) |
| POWER | $P = I^2 \cdot R$ ($A^2 \cdot \Omega$) |

As in Barlow's Wheel in n pipes nt (ti ...............tn)
Barlow's Wheel is a copper disk that is placed between the poles of a magnet,
the edge of which is in contact with a small mercury deposit.
It is connected in a battery between the wheel shaft and the mercury deposit and it is observed that the wheel starts to turn, reaching a constant limit angular velocity.
We shall verify that said angular velocity is proportional to the intensity of the current.
Barlow's wheel is reversible in the sense that if the battery is removed and the wheel is turned using an external force, you can measure the induced current that is generated. On the page entitled a disk, motor and electric generator, we shall study in detail the role played by the induced current in the movement of Barlow's wheel.

(3) Physics principles of the force exerted by the magnetic field

The force on a current element dx located at a distance x of the disk shaft is

$$\mathbf{dF = iu_t \times B} \cdot dx$$

Its module is $dF = iB \cdot dx$ and it is directed as seen in

(4) Materials

$H_2O$,

Both that of the sea as that of the river or estuary,

(5) Intervening Elements

Such as the Continuous Inflow Circuit for the Cube or the Top Tank or cistern, to the next lower Cube or tank or cistern to the lowest n tank. Until its outflow. A water treatment plant and a desalination plant may be added
in order to return such treated or desalinated water for human consumption or for irrigation.
As in agricultural terraces in the mountains,

.- Due to the Multiplier Effect ($D_1$ $D_n$)

.- In a drop of 90°, with g as the Constant of gravity g=9.8 m/s2 through.

.- In the outer Cubes, tanks or cisterns that are not already submerged in the $H_2O$, that extract the water $H_2O$, to the initial height, of n h ($h_1$ $h_n$).

.- Of the Multiplier Effect of:

The Pipes ......(ti.......... tn) by the Multiplier Effect.

Of the Cross-Section or Diameter of each Pipe (n * $t_1$ $t_n$) ($s_1$ $s_n$) by the sub-section of each of the Wheels or each of the Power Generators (Subs1)

.- In Drawing B) for each one of all the;

Generators (Gen1 ....... Genn) within the height h (h1.. hn) in Drawing A) of each Pipe (titn) times the Multiplier Effect.

Of each Multi-storey Building (E1........... En)

**(Special mentions and acknowledgements for their help and knowledge go to;**

Jesus, Saint Augustin, Moses, Newton, Galileo, Cervantes, to all of them, to my loved ones, friends and relatives, without whom this progress in knowledge and in the Freedom of all men and women of this planet Earth would not have been possible. To the Knowledge of Humanity. And to the Progress and Freedom in which we are created by God, in order to choose for ourselves our own path and destiny in life, between good and bad and always with the infinite pardon of God, and that he may prevent us from being on the fig tree and to give good fruit and knowledge to all, the best possible, for our own mistakes that we each make, with no prior conscience of our own mistakes that we made or may make, and much applause for Jesus for all of his moral and inner support. Thank you to them all. Milla Ezker. Many thanks)

(6) <u>Multiplier Effect</u>

-. The Pipes ....... (t1 ...... tn)

-. The Cross-Section or Diameter of each Pipe (n * $t_1$... $t_n$) ($s_1$ $s_n$)

-. By the sub-section of each of the Wheels or each of the Power Generators (Subs1 ................................................................................................................................... Subsn)

-. Generators (Gen1 Genn) within the height h (h1 hn)

In Drawing A) of Each Pipe (t1 ..tn) times the Multiplier Effect.

-. The Top Cube or tank or cistern by the Multiplier Effect (D1 Dn)

-. Times each Multi-storey Building (E1 En)

(7) <u>Of the Components of the Artificial Waterfalls or the Multiplier Effect of n Cubes, of the Closed Circuit of H2O</u>

-. $H_2O$
-. Whether from the existing sea, the river or estuary, the lake or reservoir or barrage, entirely covered by $H_2O$.
-. As a Continuous Inflow Circuit for the Cube, the Top tank or cistern, to the next lower Cube or tank or cistern to the lowest n Cube.
-. The 90° fall, from n height, or nh (h1 hn),
-. With g as a Constant, for the force of gravity g=9.8 m/s2,

-. Through n pipes nt (t1.......tn)
-. As in agricultural terraces in the mountains,
-. .- Due to the Multiplier Effect ($D_1$ $D_n$)
-. of each Building with n Cubes (E1 En).

In Bilbao on 12 March 2009
Signed Iñaki Astuy Díaz de Mendibil. National ID number W

**Claims**

**1. A) Preamble of claim 1 of the electricity generating Cube. generating continuous electricity. (1) Which artificially reproduces, within pipes (5) (6) the different natural waterfalls without having to depend on rainwater or on the changing flow of rivers. But on existing water bodies. (12) either of the sea, lakes, reservoirs and those existing at that time: of rivers and estuaries. Drawing 1.**
And with External Power Sources (11) to pump the return of the total volume of incoming water $H2O$ (3) that must be the same = to the total volume of outflowing water $H2O$ (4).
And at a height h that is higher with respect to the top Initial height of the surface of the total volume of water $H2O$ flowing into (3) the continuous electricity generating Cube (1) h-1
The height of the bottom of the cube (1) being in turn also higher hfc < hfvc than the final surface of the total volume of water $H2O$ in the wells or barges or communicating vessels (4). With regard to the level of the water surface $H2O$ to the continuous electricity generating Cube (1), to which they are connected via a greater number of pipes (5) (6). Although the bottom of these is at a height below that of the continuous electricity generating Cube
that then and finally returns again. Either at the level of the water, or at the top surface. And without evaporating.
Generating a Positive Energy Cycle. Said total volume of incoming water, In its travel path between both. From the continuous electricity generating Cube (1) to the wells or barges or communicating vessels (10). By the effect of the use of the positive energy and the constant effect of gravity alone times the height h of the continuous electricity generating Cube (2) (1).
Without having to depend on rainwater or natural waterfalls,
Since these are created artificially, Both the incoming and the outflowing volumes of water (3) (4)
Such as the differences in height; 1- of the level of incoming water to the Cube, 2- of the top level of the water in the communicating vessels and 3- of the level of water from which the pipes (5) (6), the blades (8) and the electricity generators (9) are fed with water $H2O$ to the continuous electricity generating Cube (1), the different heights being; he < h vc = h $H2O$ in)

**1. B) Characterising part of Claim number 1 (1) of continuous electricity generating Cube. Which artificially reproduces, within pipes (5) (6) the different natural waterfalls without having to depend on rainwater or on the changing flow of rivers. But on existing water bodies, either from the sea, lakes, reservoirs or those existing at that time; of rivers and estuaries. Drawings 1, 2, 3, 4, 5, 6, 7, 8, 9, and following.**
And that are their internal components and mechanisms;
Which continuous electricity generating Cube is characterised also in its mechanisms and components by:

**1 -Lower Cubes (1) in areas of low height h, with regard to the level of the surface of incoming water h-1 = hc, partially underground and also partially, or with greater surface in contact with the air. Drawings 1, 6, 7 et seq;**
Always, on a plane below the level of the sea, lake, reservoir, river, estuary or any other water body that the system is installed in, h-1 = hc, and inside the surface of the earth or on its banks, with respect to the bottom surface of the sea h = h incoming $H2O$ of the lake, reservoir, river, estuary from which the water is obtained for the power generating cube.
Which by gravity = Constant, g = 9.8/ms2,* h c, this water is pipelined to the end, with a height he (2), preferably more than 100 metres, which height he can be more or less, depending on the characteristics of the continuous electricity generating Cube itself (1).
**2- With n-1 surfaces or several and successive surfaces, as many as arranged throughout. Drawings 1, 6, 7, 8 et seq.**
As a basis, similar or like agricultural terraces in the mountains, many times in succession, or up to n-1 times, as much as we would like to repeat them, in a single cube. We can thus also draw a cross-section in height (2) hc1...hcn-1, the same continuous electricity generating cube, both to regulate its height he, that we would like to assign, or rather compartmentalise the main cube into several cubes. In order to access it both for maintenance of each section of the cube (1), of its pipes (5) (6) and electricity generators (9) and for repairs thereof. There may also be several sections in reserve, for cases of damage or for maintenance. See Drawings, from 1 and following.

**3- That it also has n-1 he heights in depth.**

**However we desire that height to be for the depth of the cube (1), he (2). We recommend a height of 100 metres, more or less also. See Drawings 1, 6, 7 et seq, of the whole continuous electricity generating Cube**

**4- Which also has n-1 Pipes (5) (6), or the Sum of a large amount of them, the greatest possible amount or as many as reauired, Drawings 1, 2, 3, 4, 5, 6, 7, 8 et seq.**

Throughout the continuous electricity generating Cube (1) there are n-1 pipes or several and successive pipes (5) (6), specific to the mechanism of the continuous electricity generating Cube (1) that channel and carry by gravity seawater or water from a lake, reservoir, river or estuary to the lower cube, or to exit via the successive output water pipes (6) to the communication pipes (6) to the wells or barges or communicating vessels (10) of the dewatering pumps (16), and to the return pipes (6) of the same total volume as the incoming water (3) from a greater height h+1, h+1>h, and always aided by an external power source (11) to the continuous electricity generating Cube (1) system in order to achieve the small distance that really exists between the difference in heights h ve h2O e h ve h2O out, h ve h2O out > h ve h2O h ve h2O = h phreatic level h2O = h h2O in > h c h2O in, is virtually nonexistent, and which separates them from the surface of the water level (4) of these wells or barges or communicating vessels (10) to the lower level of the surface of origin, from the total volume of incoming water (3) to the continuous electricity generating Cube (1) (9). By an existing external power source (11) that is different from the Energy generated, in the same continuous electricity generating Cube system (1).

**- (1) - (4) - (A) - The input (5) and output (6) pipes of the volume of water of the continuous electricity generating cube (3) (4) (1) artificially reproduce natural waterfalls,**

**Whenever they meet the following circumstances in the artificial reproduction of waterfalls, artificially reproduced at different heights, h, and therefore also said different heights artificially placed in a U shape (1). Thus totally and artificially reproducing in and by my own invention, the continuous electricity generating Cube (1), always through a system of artificial pipes (5) (6) that comprise the reproduction of natural waterfalls;**

They are also finally at a greater height (4) hvc > he (3) with respect to the level of the surface of height h of incoming water H2O (18) that descends to a lower height to a lower area h-1=hc and hH2Ovcout > hH2Oin, and inland and close to the bank and the surface of the level of incoming water H2O (18), in the lower height of the electricity generating elements and mechanisms of the continuous electricity generating Cube (1) of my invention, with respect to these and through connection pipes (5) (6).

The continuous electricity generating Cube (1), of my invention, that artificially reproduces the different heights of incoming (3) and outflow (4) water $H_2O$, he > h incoming water H2O (18) = h H2O communicating vessels (4).

Always through pipes (5) (6) with their own characteristic components; Natural waterfalls. Through which falls the water H2O that comes from the filling pipes (5) from the sea, lake, reservoir, river, estuary or any other water body at the same level or at a higher level than the continuous electricity generating Cube.

And through this (1).

Falls the volume of incoming water (3). Within all its pipes (5) (6).

And to the end of the height h of this electricity and clean and renewable energy generator (1) (2) in a continuous and constant manner by gravity, g = 9.8 m/s2 as a constant, with a multiplying effect of said energy by the multiple components and elements used that comprise it or are arranged within the cube itself and that make it possible (1)...(18), water inlet (5) and outlet (6) pipes, several sections and repetitions of cubes that allow (1) generating more and more electrical energy and also to allow their maintenance and repair of any damage of the components and elements of the electric energy generating Cube. That the water falls through the outlet pipes of the continuous electricity generating Cube (6) (1) to a successive series of n-1 communicating vessels (10), or the sufficient and necessary successive several Communicating Vessels with dewatering pumps (16) of the Total Volume of Incoming Water $H_2O$, as pumped in boats from the sumps, which make and prevent the total volume of water coming into the continuous electricity generating Cube from collapsing and not flowing and that the outflow is not constant and continuous and does not flow outwards and at the same height level, of the water body (18) from which the total volume of incoming water that enters the continuous electricity generating Cube (1) comes, whether this is the sea, a lake, a reservoir, river or estuary... (18),

That act as drainage wells or communicating vessels (10) for the total volume of incoming water in the entire continuous electricity generating Cube (1) by increasing the surface and extension in which the total volume of incoming water is found in the continuous electricity generating Cube.

Which is always aided by an existing external power source (11) (16) or one that may be developed such as wind power or tidal, photovoltaic and other power sources, to the continuous electricity generating Cube (1). Also for its return via the successive and necessary return pipes (6) of the total volume of incoming water (18) into the continuous electricity generating Cube (1) of my invention. With the dewatering pumps (11) (16) of the total volume of incoming water into the cube.

Always from a greater height than this (3) (4) h ve H2O out > h H2O in, (18) at the bank and at sea level or the level of the lake, reservoir, river or estuary, that the water comes from, which must always regulate (10) (11) (16) the total volume of outcoming water to the total volume of incoming water via a computer system and with several and successive suction or dewatering inlets (16), located on the top thereof and at the top water level (4) of each well or Communicating Vessel (10), (11) (16) for the suction of the total volume of incoming water into the continuous electricity generating Cube (1) and at different heights h, (3) (4) (18) of each well or communicating vessel (10) of the total volume of incoming water so that the volume of incoming water and the volume of outflowing water flows in a continuous and constant manner.

Since all the successive and necessary communicating vessels (10) as well as any auxiliary ones, for replacement or extension in the event of damage or maintenance of the assembly of the succession of several communicating vessels (10) (11) (16) (4) for the suction of the total volume of incoming water into the continuous electricity generating Cube (1) are also located inland, as is the cube, but at a greater distance from it and from the bank of the level of the; sea, lake, reservoir, river or estuary from where the total volume of incoming water into the continuous electricity generating Cube (18) (1) (3) (4) comes from.

**5- It also has a section s and n-1 sections, or several and successive sections, from n-1 s times, into which the continuous electricity generating Cube (1)** may be extended, of extensions of sections or partitions of those same sections, See Drawings 1 and following of the several parts or sections of the continuous electricity generating Cube. Drawings 1, 2, 3, 4, 5

6 - **Comprises spoon blades (8) and blades (9) of the kind common in Francis Kappler Electrical Generators and other existing hydraulic generators.**

**Such as those where there are two blades per turning shaft (8), which turn the electric generators (9) and in parallel and successively along the entire height of the cube h c(2),** Drawings 3, 4, 5, 6; Such as the diameter of the pipe of the cube both for descending water H2O (5) (6) and for rising water as U-shaped or W-shaped pipes for the suction of the total volume of incoming water H2O (8) (10) (11) (16) (4) (18) which becomes the total volume of output $H_2O$, pumped outside the continuous electricity generating Cube system, with the pumping performed by both internal pumps and also aided by an external power source, outside the continuous electricity generating Cube system, the former blades such that they cover the entire 360° of the fall of water (8), the first two the 180° on a horizontal plane and the following two spoon blades the other 180° of the horizontal turning plane not covered of the total diameter; $2\pi r$, of the surface of each of the numerous inlet and outlet water H2O pipes (5) (6) of the continuous electricity generating Cube system (1).

**7 - It also has, in addition to n-1 generators, n-1 gen (9) or several generators as many as we wish to add or sum and multiply their electricity generating effects, as is done with wind turbines in order to produce or multiply the electric power generated in the continuous electricity generating Cube system. Drawings 3, 4, 9 et seq;**

That use waterfalls of H2O that are artificially reproduced in the continuous electricity generating Cube (1) (3) (4) (18), established throughout the height he of the continuous electricity generating Cube.

And the sum of the n-1 pipes along the entire length of the height he, times the section of the diameter $2\pi r$ of each one of the pipes. (5) (6) (3) (1) (10)

Since the greater the diameter of each one of the pipes, the greater the section of all successive (9) n-1 hydraulic power generators we place and the sections of the surfaces or each blade (8) of each of the n-1 hydraulic generators (9) and that we add, as an additional multiplier effect along each addition of all the n-1 pipes (5) (6) along the entire height he and h vc (3) (4),

Equal to, or the addition of each one, the same height he (3) (5) (6) as the height he of the continuous electricity generating Cube.

As well as the multiplier effects we may add to the Pelton-type hydraulic generators or also higher, to Kapplar or Francis or the like (9) that also exist in wind power generators, which multiply the rotational movement of the blades therein.

**8- The continuous electricity generating Cube; Also has a circular system of barges or wells or communicating vessels (10) (6) (4) (11) (16) (18) that is characteristic of my invention, that also; Operate the drainage mechanism of the total volume of incoming water H2O in the barge, or well of the main cube of incoming water to the continuous electricity generating Cube via these communicating vessels. Drawings 1, 8, 9 et seq;**

**Which in this case, since the communicating vessels (10) are inland with respect to the coast or the shore of the sea, lake, reservoir, and at its same height h ve > = h incoming H2O > h c. (3) (4) (18)**

**It is from the middle of the circle approximately (10) (6) with respect to the main cube of incoming water H2O of the continuous electricity generating Cube (1) that artificially reproduces, at different heights**

**(3) (4) (18) of the levels of the surface of water H2O of the cube, the communicating vessels and the level of the surface of incoming water to the cube via pipes. Drawings 7, 8 et seq -**

**That they prevent the volume of incoming water H2O to be greater than the volume of outflowing water H2O and that the main barge does not sink with respect to the floating of interconnected barges connected via pipes or wells with respect to the main incoming water well, or communicating vessels (10) with respect to the continuous electricity generating Cube (1);**

**That dewater and pump (16) (11) (10) (4) (18) the total volume of incoming water from barges or wells or communicating vessels so that the system of constant water flow is the same system of the continuous electricity generating Cube and it does not fail, collapse or stop working.**

With pipes that are in turn connected to one another (6) and at different heights, h vc1, h vc2, h vc3... ...h vc n-1,... with respect to one another, in this same interconnection between communicating vessels (10),

Both in the horizontal surface plane of the top end of the communicating vessels, as terraces of different heights (4)

h vc final 1, h vc final 2...., h vc final 3.... h vc final n-1 .......;

Such as each one of the different pipes and at different heights from another for the emptying of these to others (6) of the same communicating vessels (10) for rising incoming water, which becomes the outflowing water via these same communicating vessels.

For the emptying of the total volume of incoming water H2O, which must be the same as the total volume of outflowing water H2O. (3) (4).

Which pour out at a greater height hvc (4) than that of the level of the surface of the incoming water H2O (18) into the pipes (5) (6) of the continuous electricity generating Cube (1) (3) he and at the same level as the plane of the level of the surface of incoming water H2O (18),

hvc h20 out = h h2o in > h h2o in,

Which feeds the continuous electricity generating Cube (1) system of my invention.

Via a pumping system (10) (16) that pumps the outflow water that is equal in volume as the incoming water so that the water H2O (3) (4) (18) flows constantly and the continuous electricity generating Cube (1) system does not collapse.

Always by means of and assisted for; the dewatering pump (16) of the volume of outflow water by an external power source (11) to the continuous electricity generating Cube (1) system, that prevents the collapse and the blocking thereof and so that the water constantly flows and rotates normally outside of the continuous electricity generating Cube system. Said pipes being U-shaped or V-shaped, from the end of the bottom of the continuous electricity generating Cube (3) (1).

Which also have spoon-like blades (8), in the rotating wheels so that they turn the n-1 electricity generators (9), which should have incorporated a turn multiplier. Such as those already existing and currently also in wind turbines, in the path of the water H2O towards the level of the surface of the water (1) (5) (6) (10) of the assembly of pipes of the communicating vessels, for pumping (16) (18) towards return pipes at a greater height h ve ho out (4) than that of the level of the water or the phreatic level of the volume of incoming water h ho in (18),

h vc h2o out = > h h20 de in,

Either on the surface of the ground itself or on the final path of the discharge of outflowing water to a lower height to that of the level of incoming water, outside of the continuous electricity generating Cube (1) system and pumped by the drainage of the total volume of incoming water H2O (16) (10) (11), which becomes the same or equal = volume of outflowing water H2O.

Always aided by an External Power Source (11) in order to prevent the collapse or failure of the continuous electricity generating Cube system and so that it flows constantly and continuously and turns; (and thus never collapses and stops, so that all speeds and pressures of the total volume of incoming and outflowing water H2O are equalised until its collapse and stop, until it is finally static. Which does not occur in my continuous electricity generating Cube (1) system) and turns and keeps turning the total volume of incoming water, outside of the continuous electricity generating Cube (1) system itself

Which thus becomes a constant, and where the same or equal = volume of outflowing water, at a greater height h than that of the water body of incoming water into the continuous electricity generating Cube (18) (1) (3) system of my invention. For its outflow from the system or even within the water body H2O that provides water to the continuous electricity generating Cube system via pipes (5) (6) and also at a lower height than the level of the surface of water from the sea (4) (18), lake, reservoir, river or estuary or from water body that provides water, always via pipes, to the continuous electricity generating Cube (1) system of my invention.

Which must always be equal =, the total volume of outflowing water, to the total volume of incoming water, or else greater, and there must be a corresponding regulation mechanism to close or adjust (17) such volume of incoming water from the control of the total volume of outflowing water, or return water to the level of the surface of the incoming water (3) (4) (18), such that the control of the total volumes of outflowing water (17) are equal = to the volumes of incoming water to the cube (1) are controlled by computer,
Or with minor oscillations, as long as they prevent the failing of the successive valves arranged (17) (16) of the suction pumps for dewatering each of the assembly of the successive and necessary wells as communicating vessels (10) with the dewatering pumps for the total volume of incoming water (16) to the continuous electricity generating Cube (1) of my invention. So that the total volume of incoming water may flow. As a Constant, V H2O in = V H2O out = Constant.

So that the power potential obtained is always also a Constant, since G is another Constant. And Time T operates as another Constant.

this series from successive and from several Constant;

1- The total volume of outflowing water with respect to at 2, and which regulates V H2O out = Constant

2- Total volume of incoming water, V H2O in = Constant

3- Force of gravity g= 9.8 m/s2 x h = Constant

4- Height or he of the continuous electricity generating Cube, hc = Constant

5- The Force or Potential of Total Electrical Energy Resulting from the continuous electricity generating Cube

$$F=m*a, \quad P=V\,h20*g*h = Constant$$

6- That the Time at which all this series of successive constants occur is also Constant T=Constant

- **And that they are a practical and very useful application for all, also energetically, Given its better and much lower cost of production and generation of electric energy with respect to all other existing systems for the generation of electric energy, both fossil, and non-fossil. And characterised in that it also has much less emissions and contamination of the environment than any other systems of electric energy generation.**

Always in terrestrial physical parameters, from Einstein's theory of relativity

1- Of Time, $T \neq T1, T2,...... \neq T$

2- And the Curvature of mass in space due to gravitational causes, that on Earth are equivalent, always in terrestrial physical parameters; To be formed with the mass and the volume of the water body, especially in large water bodies, successive and non-planar n-1 oscillations on the form of waves and tides due to terrestrial gravity, with respect to the gravitational forces in Space, mainly from the moon and the sun.

When the water mass is curved suddenly,

as in a black hole, always in terrestrial parameters, there is that same mass or volume of incoming water, in an equal value or mass of incoming water in the output wells or communicating vessels as the total volume of incoming water and which entire mass or volume of incoming water returns to the bank of the sea, lake or wherever it came from. And lower height. h-1.

Without there being any theoretical loss or evaporation of mass or volume of water in said path of the constant cycle of inflow and outflow of water $M \neq M1 \neq M2....\neq Mn-1$

At the shore and at the level of the total volume of incoming water coming into the continuous electricity generating Cube.

3- Where the observer of the same physical and energetic phenomenon is also relative, if he were to be in space or on the Earth itself,

Since they would observe, the Earth and Space, without any Constants.

Except for the Constants of my continuous electricity generating Cube described above, in a single location; Planet Earth.

And not precisely in Space, as suggested to us by Einstein, in his theory of Relativity. $1 \neq 2 \neq 3 \neq ......\neq n-1$

- **The Energetic Potential could be another Constant generated by my continuous electricity generating Cube of my invention,** by the total height h of the cube, or the sum of its h sections,

-

$$\underline{F= P= Const. *(h = Const.) = Const. *Const.= Const.}$$

And by its n-1 extension, both in its inlet diameter and in the succession of n-1 of its longitudinal and superficial extension of this very continuous electricity generating Cube of my invention.

Such that,

The total volume of incoming water $H_2O$, of 100 m3, of reference $H_2O$, of a single reference inlet pipe into the continuous electricity generating Cube, or of outflowing $H_2O$, at the surface level, of the barges or communicating vessels, connected to one another.

At a height he, of 100 m, as a reference of he, of the continuous electricity generating Cube, which **Falls in a vertical plane,** by gravity g,

Generating an energy potential of

$P = v \times g \times h = 100 \times 9.8 \times 100 = 98,000 w = 98$ Kw.

Which is the ratio to be multiplied by each 100 m3 reference unit of volume of incoming water $H_2O$.

That is generated as it falls (3) (4) (18) (1) (5). And also as it rises (6), the continuous and constant movement of the blades (8) of the rotors of the power generators (9).

To the surface of the barges or wells or communicating vessels (10), in a reference ratio of 1/10, with regard to the total reference volume of incoming water $H_2O$, to exit or be emptied into the original source of water that feeds the electricity generating system via the pipes. That is 100m3 /10 = 10 m3 of reference volume of water, or of volume ratio, of the reference communicating vessels (10) with regard to the reference volume of incoming water $H_2O$ of 100 m3, and which I have also taken as a reference.

There would therefore be 10 communicating vessels, in a v shape from the end, from the bottom of the continuous electricity generating Cube (1) (2) (19), with a volume 10 times less, connected to one another and with proportionally less pressures than that of the pipe of the 100 m3 reference volume of incoming water $H_2O$.

Moreover, with a degree of inclination of said v from the U of the continuous electricity generating Cube (1) system, which artificially reproduces both the different inflow and outflow heights of the water $H_2O$ (3) (4) (18) and natural waterfalls,

And after the end of the bottom of the continuous electricity generating Cube (1) (3) of an inclination of approximately 452.

Until reaching the surface of the outflow pipes (6) (10) of the total volume of incoming water $H_2O$ of the barges or wells or communicating vessels that are at a height h ve $H_2O$, h ve $H_2O$ being = h $H_2O$ in > he vol $H_2O$ in (3) (4) (18)

It is greater than the height of the entry of the total volume of incoming water $H_2O$ coming into the continuous electricity generating Cube (1) he vol $H_2O$ in

And equal = to the height h $H_2O$ in, from where the pipes for entry of incoming water $H_2O$ come from. (5) (6)

Such that the level of the water surface of the communicating vessels (10) that communicate with one another (4) (18) is equal to the level of incoming water, through pipes in an area that was previously always artificially depressed (3) in height, h-1 = he < h vc = h incoming h2o, inland

Which are in turn even further inland than the continuous electricity generating Cube (1) of my invention, or at an even greater distance than it from the shore; of the sea, lake, reservoir, river or estuary, or any other water body from which the continuous electricity generating Cube system (18) is supplied

Pouring the reference volume of incoming water of 100 m3 via pipes directly (5) (6) (10) or to a tank in parallel connected by pipes at a greater height h ve $H_2O$, h vc $H_2O$ > he $H_2O$ in, and thus than h c, (3) (4) (18)

Which hypothetically or theoretically contain the total of the volume of incoming water $H_2O$ that is found in the circular rings of the surface of the communicating vessels (10) (6), with a difference in heights between the continuous circular rings of the communicating vessels (10) (20), with a drop in height of h ve (4), farther from the centre of the circular system of the most central rings of the communicating vessels (10) for drainage of said total volume of incoming water $H_2O$, which when exiting the communicating vessels (10) towards the level of the surface of incoming water $H_2O$, (18) (3) becomes the total of the volume of outflowing water $H_2O$, at a greater height than the latter, (4)

h ring vc1 > h ring ve 2 > h ring ve 3 >......h ring ve n-1 (10) (20)

Always aided by an external power source (11) (16) (4) (18), or to the sea, lake, reservoir, river or estuary, or any other water body from which water $H_2O$ is taken, the continuous electricity generating Cube system (1) that artificially reproduces both the different heights of the system; he < h ve out = H $H_2O$ in, in a U shape. (3) (4) (18)

Always via pipes (5) (6), which are at the same height level as the surface level, h ve vol $H_2O$ out = h vol $H_2O$ in. (4) (18).

Or the lower height h-1 = h c (3) of the level of the surface of the continuous electricity generating Cube (1), where the actual entry of the reference volume of incoming water $H_2O$ of 100 m3 occurs via pipes (5) (6).

Always also aided in the suction pumps (16) (10) (11) of the total volume of incoming water, which must always be equal to the volume of outflowing water so that it flows continuously. And so that it is constant = Constant

Despite it being at a height h, that is greater by one metre as a reference measurement to or with respect to h-1,= H2O in (18) (3)

From that of the incoming water H2O (18) to the continuous electricity generating Cube (1). That is depressed in a total manner by my invention and artificially in height, h-1 = h H2O in (3), with respect to the latter and with respect to the level of the surface of the water H2O (18) from where the volume of incoming water H2O is also taken via pipes (5). **In a U shape. (1)**

Since we actually transfer the reference volume of water of 100 m3, **From a Vertical Plane (2) (5) to a Horizontal Plane (10) (6) (4), with a theoretical tank of the total volume of incoming water H2O = to that of the volume of outflowing water H2O, and in parallel to the communicating vessels that are connected to one another,** via pipes (6), of the sum of the total volume of outflowing water H2O = the total volume of incoming water H2O, from a metre in height h of reference that is higher than the height h-1 of the surface of the continuous electricity generating Cube, he (3) (4) (18)

$$h = h\, h20 > he = h\text{-}1$$

With a consequence that is an energy gain of more than 99% or even 100%, as explained below, due to the difference in heights of; hvc, hc, and h H2O (h vc> = h h20)>(h c = h-1),(3) (4) (18)

**And at a lower production cost of electrical energy than that of the remaining electric energy generators from other conventional power sources from fossil fuels**

**And also from those coming from non-fossil or renewable power sources, including hydroelectric plants -**

**Since my invention of the continuous electricity generating Cube system has costs that also dilute over time, being much less than the rest**

**As a direct result of the electric generation of the continuous electricity generating Cube of my invention being continuous and constant, by artificially reproducing the different natural heights and waterfalls**

**And since it own mechanism operates constantly and continuously and its proper operation, !!!! All 8760 Hours every Year !!!!. Of the continuous electricity generating Cube (1)**

**And as a direct Consequence of the constant and fluid operation by all its elements and components; (1) (2) (3) (4) (18) (5) (6) (7) (8) (9) (10) (11) (12) (13) (14) (15)(16) (17) (19) (20).**

And the continuous turning and flowing of the incoming water H2O into outflowing water in the same system (1), and without depending on rainwater as other hydraulic generators, but on a water body (12) that is let into my electric generator system (1)(2)(3)(4) (18), of the total costs of building, land and materials; pipes (5) (6), blades (8), generators (9), communicating vessels (10), suction and extraction pumps (16), always aided by an external power source to the system (11) and for sucking up the incoming water H2O

And from the Vertical and Horizontal Planes And in the General Drawing of the system as a U shape (1), (18) (3) (4), in which it shall be placed and channelled

The reference volume of water H2O of 100 m3 (12), that I have indicated.

**And that the volume of incoming water H2O = Volume of outflowing water H2O Such that they are Equal = A to a Constant = Constant.**

It would also fall, anyway, only by the difference in height between both levels (4) (3), without theoretically requiring the aid of any existing external power source (10) (11) (16) (18) beyond the continuous electricity generation system Cube, except in the system itself collapses naturally or accidentally. Generating a Power Gain of more than 99%

Since it is at one metre of reference higher than the continuous electricity generating Cube h ve > h c, and the level of the surface of the water valve that is poured into the sea, lake, reservoir, river or estuary, or any water body that supplies to a greater incoming height h H2O in, with respect to the height of the surface of the cube system hc.

And except for a fault or collapse of the continuous electricity generating Cube system. Even a gain of 100% if not aided by the always necessary external power source. Since there is, in fact, a difference in height between the three heights of the system.

H VC = h H2O > h C, **WHICH FORM A U SHAPE. (1)**

- Which shall be more or less depending on the addition n-1 of each one of the elements and features making up my invention of the continuous electricity generating Cube (1) (2) (3) (4) (18) (5) (6) (7) (8) (9) (10) (11) (16)
- From the greatest, 2 π r possible, or a number resulting from the diameter of each one of the possible n-1 pipes (5) (6) that make up the inlets and outlets for the volume of water H2O,
- To the addition of the n-1 electricity generators proper (8) (9).
- And of its n-1 multiplier effects, that are within each of the pipes of the continuous electricity generating Cube.
- As well as the efficiency of the continuous electricity generating Cube depending on the above, and that it is Always controlled by computer (17), the total volume of outflowing water, the total volume of incoming water in the wells or communicating vessels (10) (11) (16), with the corresponding dewatering pumps of the same volume of incoming water into the continuous electricity generating Cube.
- **That must be = Equal in both Incoming and Outflowing Total Volumes of water and, V total outflowing water = V communicating vessel 1 + V communicating vessel 2 + V communicating vessel 3 + V communicating vessel 4 + V communicating vessel 5 + V communicating vessel n-1 (10) (6)**

**V total outflow water = V total incoming water**

- I shall repeat and summarize again. So that the volume of water flows and exits and turns and flows continuously, and so that it is a constant; of the total volume of incoming water, which mean that the main cube or barge does not sink (1) (2) with respect to the succession of the necessary wells or communicating vessels (10) (6) that are connected to one another and with different heights from higher to lower and lower level or greater height than the bottom of the continuous electricity generating Cube (3) (4) (18)
- That are also located further inland than or with respect to the continuous electricity generating Cube of my invention. And also, with regard to the level of the surface of the sea or the water body that the water comes from (12), the total volume of incoming water to the continuous electricity generating Cube (1).
- **And of the Always necessary existing External Power Source (11), either wind powered or tidal or photovoltaic, etc. In order to draw the water from the wells or barges or communicating vessels (16) (10), of a smaller section or volume of each one (21) (6), which is not the sum of the total of each one. as that of the continuous electricity generating Cube (1).**
- **V vc < V c. and V vc1 + V vc2 + V vc3.... V vcn-1 > V c**
- **And also keeping the largest proportion of Possible and Necessary Volume of Air, For a better and optimal handling, repair and maintenance and preservation. (22)**
- **- With suction pumps (16) to dewater the total volume of incoming water.**
- As should always be present also in the continuous electricity generating Cube (1), to which they are also communicated via more or a greater number of pipes (6).
- And at a greater final bottom height, h f vc > h f c, (23) (24) than that of the continuous electricity generating Cube. And channelled via pipes also to the outside (5) (6) (25), from further inland, at a greater distance than that of the continuous electricity generating Cube.
- **That make; a complete water inflow and outflow Cycle, without evaporation,**
- That is produced artificially and via pipes (5) (6) similarly as it occurs naturally, in Nature, on planet Earth.
- **Always aided (10) (11) (16) by an external power source to the continuous electricity generating Cube. That already exists, whether wind or tidal or photovoltaic or the like.**
- For extraction, with pumps to the surface of the channels of the return pipes (24), **h v H2O out > h v H2O in** (4) (18) (12) at the level of the surface and to the shore from where the total volume of the incoming water to the electric generator Cube at a lower height always than that of the inlet at the level of the surface of the sea or lake or reservoir, river, estuary or water body on which the system is installed.
- Despite it being at a greater height h vc H2O out (4) (3)

## h vc H2O out > h c H2O in,

from the level of the surface of the water all the necessary drainage wells or barges or communicating vessels (10) (4)

- Than the level of the height h c H2O in (3) from the surface of the incoming water or the water at the start of the continuous electricity generating Cube (18 (4) (12)

And also, despite the level of the height of the water surface or nearby around its successive and consecutive valves in height h v H2O at the phreatic level (4), h v phreatic lev = h lev H2O in, (4) (18) (12) of the same dewatering wells or barges or communicating vessels (10), (16) communicated via pipes to one another (6) to the continuous electricity generating Cube (1). Which is the same phreatic level as the level of the surface of the water of the total volume of incoming water to the continuous electricity generating Cube, h lev H2O in. (4) (18) (12)

- With regard to the surface from where the assembly of pipes is found for the channelling of the outflow and incoming water to the continuous electricity generating Cube of my invention (24) (5) (6) (1)

- Which goes from a greater to a lower height to the shore or a lower height similar to that of the level of the surface at the lowest height (25) (3) (4) (18) (12) (1)

- h ve H2O out > h H2O in > h H2O c

- It is this small difference existing between both heights of hv, h vc H2O and h cv H2O that is sufficiently small so that auxiliary to and without the Always necessary (11) (10) existing External Power Source, such as wind or others; for pumping or for extraction (16) of said total volume of outflowing water, equal to the volume of incoming water into the continuous electricity generating Cube (1). May also be accomplished

- With pressure pumps (26) such as those used in the assembly of buildings of a city or town, which would only be used when the other external power sources (11) were not working, or those that are for use, to substitute or for repair works and maintenance of the External Power Sources, to the continuous electricity generating Cube n-1 (1).

- **9 - It can also have, and complementary and supplementarily or auxiliarily or annexed to the continuous electricity generating Cube itself.**

A water treatment plant to optimise the water H2O both for human consumption or for irrigation. See Drawings 1, 2, 3, 4 and following

By traditional methods of reverse osmosis

Either, by the artificial reproduction of the methods of Nature itself, by freezing the water H2O and the corresponding desalination thereof by the freezing of seawater, which makes the salt precipitate to the bottom of the unfrozen water, the frozen water being ready for consumption, both human and for animals or for irrigation. Wherever it is scarce. Thanks to the Large Amount of electrical Energy generated, by the continuous electricity generating Cube of my invention.

**2. Claim number (2) of the continuous electricity generating Cube (1) that is added to and completes Claim number (1) of the continuous electricity generating Cube;**
**Which artificially reproduces, within pipes (5) (6) the different natural waterfalls (3) (4) (18) without having to depend on rainwater or on the changing flow of rivers. But on existing water bodies, either from the sea (12), lakes, reservoirs or those existing at that time; of rivers and estuaries.** The continuous electricity generating Cube (1) of Drawings 1, 6, 9 et seq, is placed inside an existing water body (12), whether this is the sea, a lake, river or estuary. Anchored or fastened to the bottom thereof (26), such that;

1- the input of water into the water channelling pipes is at the surface of the inlet of the total volume of water, both heights h being equal,

h c = h H2O in. a) being anchored, b) or floating at the level of the water H2O of the water body used by the continuous electricity generating Cube (1) (2) (5) (18) (12)

2- And the water level of the surface of the pipe of the different barges or wells or communicating vessels (6) (4) (10), for pumping (16) via an existing external power source (11) to the power source for the continuous electricity generating Cube (1),

for its return to this (12) outside the system of the continuous electricity generating Cube It must always be (4) (10) (12) (18),

a) at a greater height h vc, a-1) inland, a-2) or with an outlet at a greater height than that of the continuous electricity generating Cube system in the same environment (15) from which the incoming water comes from (3) (12).

To that of the previous heights of the cube hc, and the level of the incoming water to the Cube; h vc H2O out > hc = h H2O in.

For the return of the volume of incoming water to the water body to the environment of origin (12); Whether this is the sea, a lake, reservoir, river or estuary, or any other 20 water body that the continuous electricity generating Cube (1) uses.

b) or at a final lower height h vc (4) to that of the previous heights of the Cube h c (2) (3) and especially at a lower height to that of the level of the surface of the water body 25 (12)

of the volume of incoming water H2O (18) of the origin of the continuous electricity generating Cube (1) system, which makes the volume of incoming water really flow and exit the continuous electricity generating Cube (17) system,

h vc H2O out < hc = h H2O in. (3) (4) (18)

3 - The pumping of the water to be pumped by the water pumps (16) (10) by the always necessary External Power Source (11), Must be 5 maintained and regular the total volume of incoming water H2O such that it is constant, a constant, Total volume of outflowing water = Total volume of incoming water (17).

So that the water flows and does not collapse the continuous electricity generating Cube system.

**3. Claim number (3) of the continuous electricity generating Cube, which is added and completes claims (1) and (2) of the continuous electricity generating Cube (1): Which artificially reproduces, within pipes (5) (6) the different natural waterfalls (2) (3) (4) (18) without having to depend on rainwater or on the changing flow of rivers. But on existing water bodies, either from the sea (12), lakes, reservoirs or those existing at that time; of rivers and estuaries. Drawings 1. 3, 5, 6 et seq.**

But it is not built on a lower plane or height h, (1) (3)

With regard to the level of the inlet surface of water H2O. (12) (18)

But rather uses the different and successive constructions of buildings already built or to be built on the surface of the Earth. (13)

That are at different heights or different h; h1....hn-1 (27) Similarly or equal to the different natural waterfalls existing naturally in Nature.

But filling out or enclosing the Cube or the existing or future construction, with a space with two circles with closed circular surfaces (14) with a distance to one another, for example, of 5 metres or less, sufficient to house inside the sufficient volume of water (12) from the sea, lake, reservoir, river, estuary or from any water body used to supply the system. So that the water rises when it is filled up, until the surface of the entire inner volume of the ring of two circles (3) (18) (14), that are sufficiently close to one another 5, and also sealed in order to prevent water leaks.

That greater height h to that of the continuous electricity generating Cube makes the water within it decant, via differences in height, to the top well or reservoir of the building, at a lower height h-1, which thus provides water to the elements and components; pipes (5) (6), wheels (7), blades (8), generators (9) external power source (11), pumps (16) of the continuous electricity generating Cube (1), which is the same as that of Claim number one.

And that the outlet water pipes (6) in the lower part of the continuous electricity generating Cube at a height h (29) provide water to another continuous electricity generating Cube located, at a height that is less than the initial one (30), propelled 15 and carried by gravity g = 9.8 m/s2 and by the difference in height between them both.

Thus repeating the mechanism as many times as there are cubes or continuous electricity generating buildings. At a lower height than the initial one. h-1.(3)(4)(18)

**4. Claim number (4) of the continuous electricity generating Cube, which is added and completes claims (1) (2) and (3) of the continuous electricity generating Cube (1): Which artificially reproduces (1) (2) (12), within pipes (5) (6) the different natural waterfalls (3) (4) (18) without having 25 to depend on rainwater or on the changing flow of rivers, but rather on existing water bodies, either from the sea, lakes, reservoirs and those existing at the same time; of rivers and estuaries. Drawings 1. 10. and following -**

But with the difference that the output pipes (6) of the volume of incoming water come out at a lower height than the base of the circular rings that surround the continuous electricity generating Cube h vc H2O out < h rings H2O (4) (4')

Which lead to an external water tank (10) and at a greater distance from the building and of the 5 circular rings surrounding the cube (12) (13) (14).

Forming a third parallel ring (14') for the inlet of the outflowing water. Forming another communicating vessel (10) with the previous ones and at a greater height, than that formed by the previous one, h vol H2O a3 > h vol H2O a1-a2. (3) (4) (18)

So that it falls by decanting by gravity and the difference 10 in heights of the volume H2O of both circular rings (3) (4) (18) (14') feeds water by pipes (5) (6) in a constant manner to the volume of the previous ring of incoming water (14') (24).

Which with the same principles of Claims (1) and (2) of maintaining constant and equal; The total volume of outflowing water = The total volume of incoming water 15 (17).

And via its always computer regulated continuous electricity generating Cube of this basic and fundamental principle of my continuous electricity generating Cube (1) that artificially reproduces both the different heights (3) (4) (18) that in this claim are once again modified with respect to the previous claims 1, 2, and especially claim 3, with respect to the previous claims 1 and 2.

And the pumps (10) (16) always aided by an external power source (11) to the continuous electricity generating Cube (1).

Which return to a greater height than that of the inlet to the surface of the existing volume between said circles through which the water is filled until the top, at a greater height h+1 than that of the building h. (14) (14') (3) (4) (18).

That due to the difference in height h+1 > h, said water is poured, also channelled, via pipes, the volume of incoming water into the continuous electricity generating Cube.

With the corresponding auxiliary drainage pipes (6) and emergency pipes in the event of a fault, or for maintenance or in case of an excess volume of water with respect to the total volume of incoming water in Claim (3) of the continuous electricity generating Cube.

Statement according to Article 19.1

The mechanism and operation of the continuous electricity generator cube of PCT 2010/153 artificially reproduces; Natural waterfalls

At different heights h from the level of the initial incoming water H2O to the final outlet or return level of its several communicating vessels to the level of the water of the original water body; sea, lake and Always aided and regulated by an external power source; Wind... The volume of outflowing water is equal to or greater than the volume of incoming water

Neither are gravity and the differences in pressure at different mobile heights eternal.

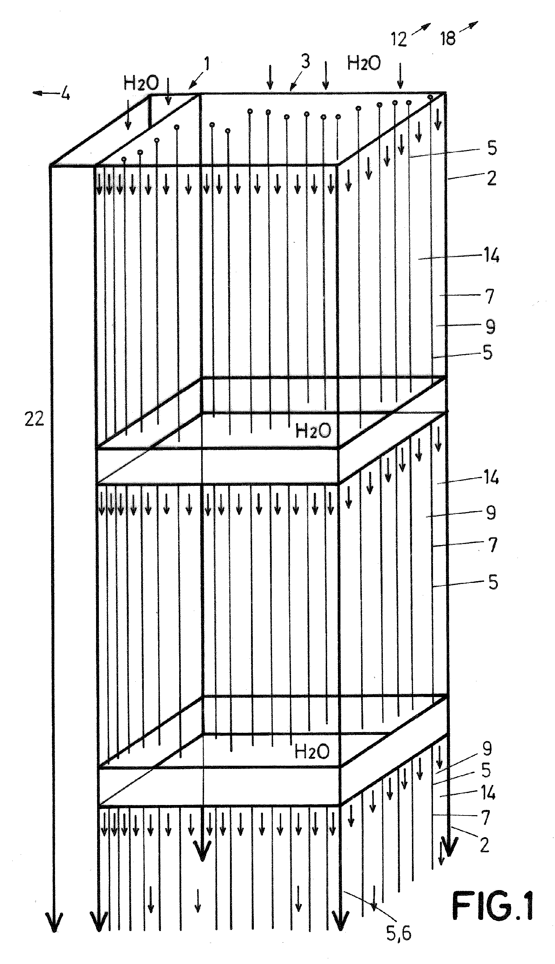

FIG.1

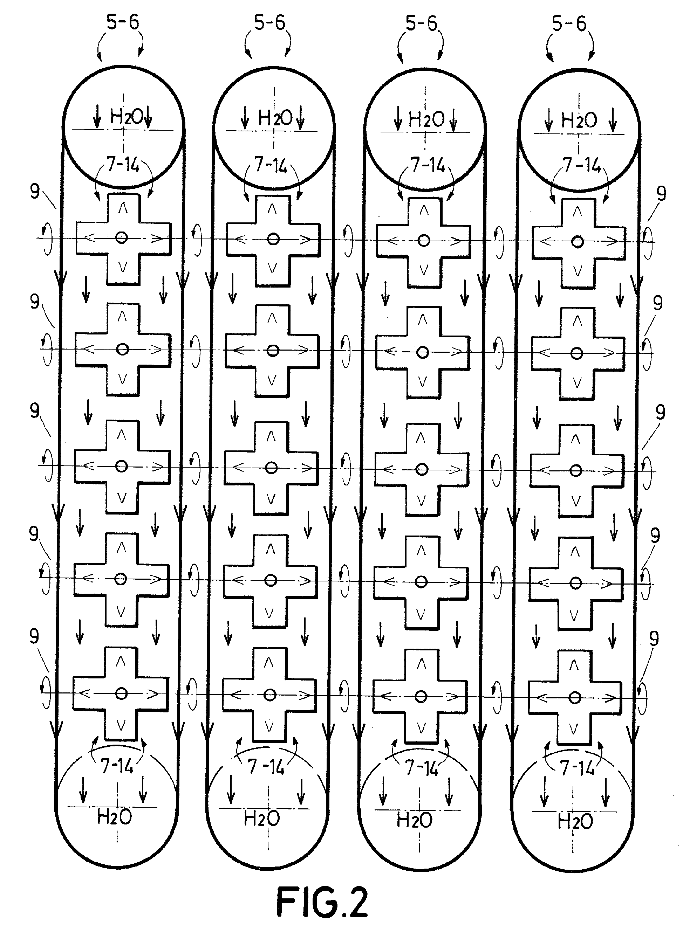

FIG.2

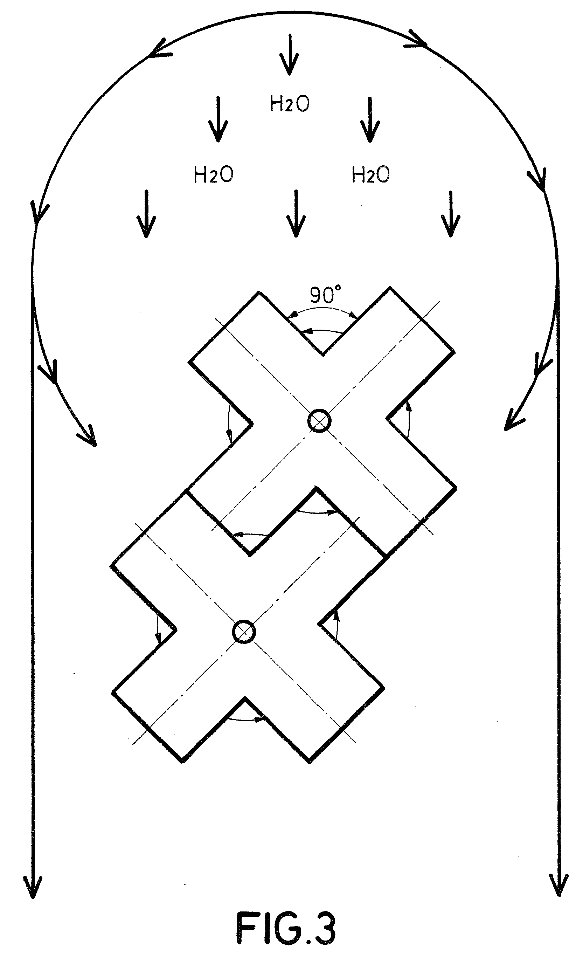

FIG.3

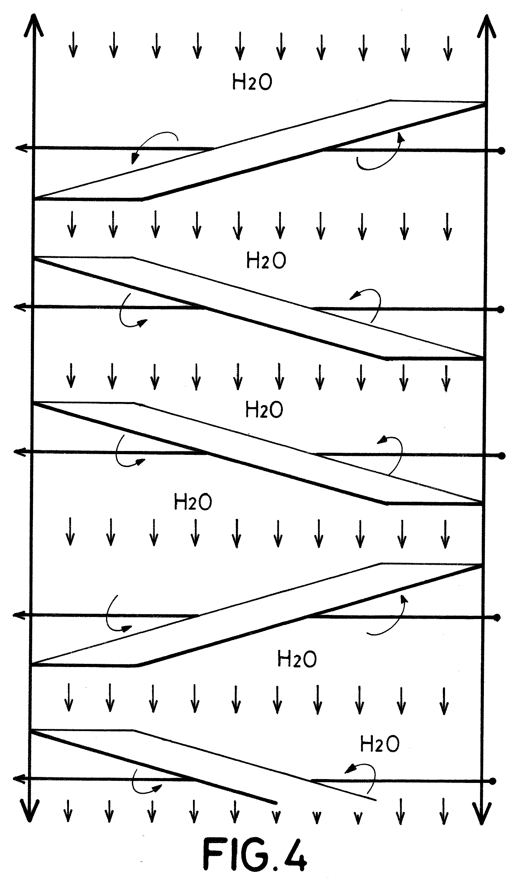

FIG.4

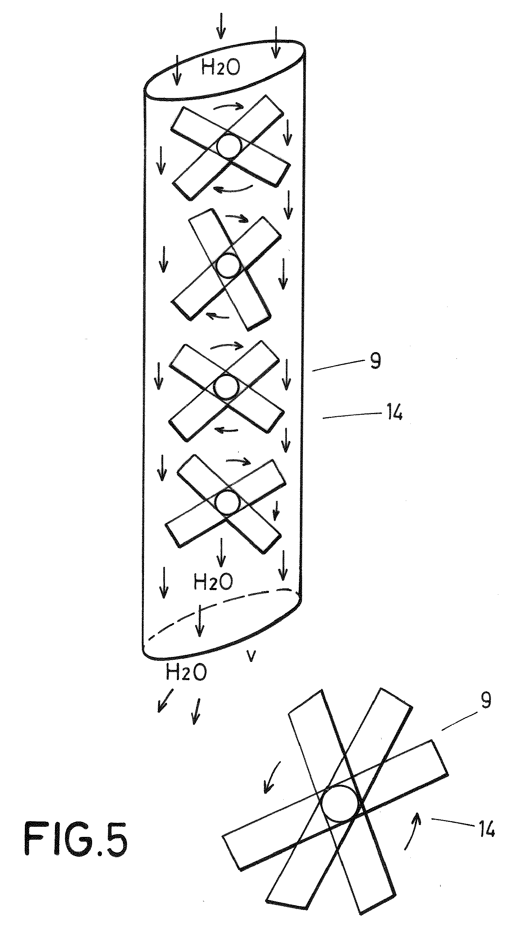

FIG.5

**EUROPEAN SEARCH REPORT**

Europäisches
Patentamt
European
Patent Office
Office européen
des brevets

Application Number

EP 16 17 0643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 46073 79 A (BISSAC E G) 23 October 1980 (1980-10-23) * figure 1 * ----- | 1-4 | INV. F03B17/06 |
| A | US 6 114 773 A (KOURIS PAUL S [AU]) 5 September 2000 (2000-09-05) * claim 1; figure 1 * ----- | 1-4 | |

TECHNICAL FIELDS
SEARCHED      (IPC)

F03B

The present search report has been drawn up for all claims

| Place of search | Date of completion of the search | Examiner |
|---|---|---|
| The Hague | 7 November 2016 | Areal Calama, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 17 0643

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2016

| Patent document cited in search report | | Publication date | Patent family member(s) | Publication date |
|---|---|---|---|---|
| AU 4607379 | A | 23-10-1980 | NONE | |
| US 6114773 | A | 05-09-2000 | NONE | |

For more details about this annex : see Official Journal of the European Patent Office, No. 12/82

EPO FORM P0459